# EUROPÄISCHE PATENTANMELDUNG

(11) **EP 2 189 342 A2**
(43) Veröffentlichungstag der Anmeldung: **26.05.2010**
(21) Anmeldenummer: 09400052.8
(22) Anmeldetag: 11.11.2009
(51) Int. Cl.: B60S 3/04

(54) **Handgerät zur Trocknung gewaschener Fahrzeuge**

(30) Priorität: 20.11.2008 DE 202008015484 U
(71) Anmelder: Posth, Tassilo, 66117 Saarbrücken (DE)
(72) Erfinder: Posth, Tassilo, 66117 Saarbrücken (DE)

(57) **Zusammenfassung**

Handgerät zur Trocknung gewaschener Fahrzeuge, das länglich ausgebildet, über eine flexible Leitung an eine Druckluftquelle anschließbar ist und wenigstens eine Austrittsöffnung für Druckluft aufweist, wobei die Austrittsöffnung am Gerät längsseitig angeordnet ist, und wobei das Handgerät mit einer schlitzförmigen Austrittsöffnung und /oder einer Reihenanordnung von Austrittsöffnungen für die Erzeugung einer vorhangartigen Trocknungsströmung versehen wird,
wobei das länglich ausgebildete Trocknungsteil(2) mindestens ein arretierbares Gelenkstück und / oder mindestens ein arretierbares Scharnier und / oder mindestens ein arretierbares formflexibles Material enthält, so dass die Form durch mindestens eine Knickstelle variabel wird.

## Beschreibung

Die Erfindung ist ein Handgerät zur Trocknung gewaschener Fahrzeuge, dessen Trocknungsteil in seiner Form variabel ist.

Es gibt ein Handgerät zur Trocknung gewaschener Fahrzeuge (EP 1650091), das länglich ausgebildet, über eine flexible Leitung an eine Druckluftquelle anschließbar ist und wenigstens eine Austrittsöffnung für Druckluft aufweist, wobei die Austrittsöffnung am Gerät längsseitig angeordnet ist.

Die Form des Trocknungsteils, und die Arbeitsrichtung des Handgerätes kann nicht geändert werden.

Die Aufgabe der vorliegenden Erfindung ist, das Trocknungsteil des Handgeräts in seiner Form variabel und die Arbeitsrichtung variabel zu machen.

Die Aufgabe wird dadurch gelöst, dass das länglich ausgebildete Trocknungsteil des Geräts mindestens ein arretierbares Gelenkstück und/oder arretierbares flexibles Material enthält, um so seine Form zu verändern. Die Griffeinheit enthält mindestens ein bis zu 360 Grad drehbares Kugelkopfgelenk, um so die Arbeitsrichtung des Handgeräts und die Neigung des Trocknungsteils verändern zu können.

In einer bevorzugten Ausführungsform der Erfindung enthält
das /oder die mehreren arretierbaren Gelenkstücke bzw. das entsprechende flexible Material an seiner Unterseite mindestens eine Öffnung für die Trocknungsluft, die an den Druckluftkreislauf angeschlossen ist. Das arretierbare Gelenkstück bzw. das entsprechende flexible Material enthält eine automatische Verstellmechanik, die beim Ändern der Form des Trocknungsteils hilft.

In einer bevorzugten Ausführungsform der Verstellmechanik ist die Verstellmechanik pneumatisch betrieben, sie kann aber auch hydraulisch, elektrisch, magnetisch, chemisch oder auf eine andere Art betrieben werden.

In einer bevorzugten Ausführungsform der Griffeinheit enthält die Griffeinheit mindestens ein arretierbares Gelenk oder arretierbares flexibles Material, um so ihre Form zu verstellen, mindestens ein teleskopartiges Teil, um so ihre Länge zu verstellen, mindestens einen Druckluftanschluss, um so das Trocknungsteil mit Druckluft zu versorgen, mindestens eine Verstellsteuerung für die Verstellmechanik des Gerätes, um so leicht mit der Griffeinheit bedient zu werden, mindestens ein Display zur Anzeige der Trocknungszeit und mindestens einen Computerchip, der z.B. das Trocknungsprogramm und/oder die Verstellmechanik steuert.

In einer Ausführungsform ist die Griffeinheit durch eine lösbare Verbindung vom Trocknungsteil abnehmbar.

Die Erfindung soll nun anhand von Ausführungsbeispielen und der beiliegenden, sich auf diese Ausführungsbeispiele beziehenden Zeichnungen näher erläutert werden. Es zeigen:
Fig. 1a,b ein Ausführungsbeispiel für das Handgerät zur Trocknung gewaschener Fahrzeuge mit unterschiedlich eingestellten Formen des Trocknungsteils in einer Seitenansicht,
Fig. 2a,b ein Ausführungsbeispiel für ein Handgerät zur Trocknung gewaschener Fahrzeuge mit eingestellter Bügelform des Trocknungsteils in einer Seitenansicht und einer Ansicht von unten

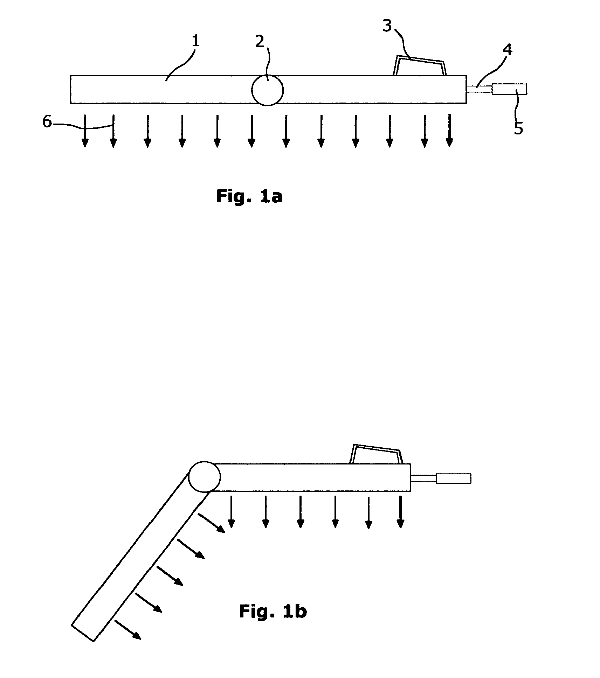

Gemäß Fig.1a,b ist ein länglich ausgebildetes Trocknungsteil 1, das ein arretierbares Gelenkstück 2 enthält, mit einem Handgriff 3 versehen und weist an seiner Unterseite in linearer Reihe angeordnete Öffnungen(auf der Abb.nicht sichtbar) für den Austritt von Druckluft auf. An seinem mit einem Handgriff 3 versehenen Ende ist am länglich ausgebildeten Trocknungsteil 1 ein Anschlussstück 4 angebracht, das der Verbindung mit einem Druckschlauch 5 dient, welcher an eine Druckluftquelle (nicht gezeigt) anschließbar ist.

In dem Ausführungsbeispiel beträgt die Länge des Trocknungsteils etwa 120 cm. Durch die Reihenanordnung von Austrittsöffnungen lässt sich eine vorhangartige Trocknungsströmung 6 erzeugen, welche weite Teile einer zu trocknenden Fahrzeugkarosserie erfasst.

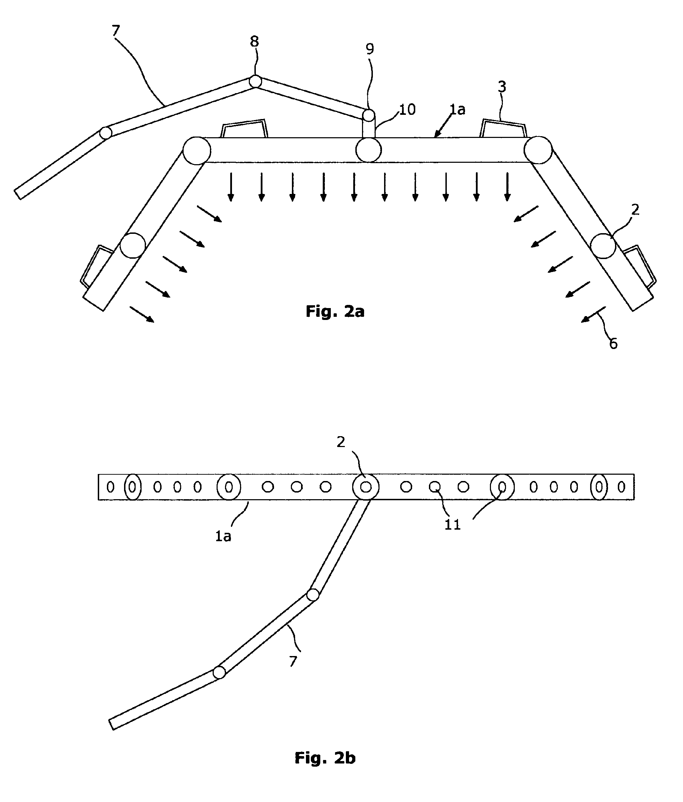

Das in Fig.2a,b gezeigte in seiner Form variable ausgebildete Trocknungsteil 1a, mit nicht sichtbaren in linearer Reihe angeordneten Öffnungen oder einer schlitzförmigen Öffnung ist durch die fünf arretierbaren Gelenkstücke 2 in Bügelform fixiert. Die eine am Trocknungsteil mittig angebrachte stielförmige Griffeinheit 7 enthält
am Ende ein Kugelkopfgelenk 9 und ein Verbindungsstück 10 zum Trocknungsteil 1 a des Handgeräts. Die Griffeinheit 7, die aus drei teleskopartig gegeneinander verstellbaren Teilen und zwei knickbaren Gelenkstücken 8 besteht, ist individuell eingestellt. Die Gelenkstücke 2 haben an ihrer Unterseite jeweils eine Öffnung 11 für die Trocknungsluft. Die integrierte Verstellhilfe für das Trocknungsteil 1a, die Verbindung zur Druckluftquelle und die Druckluftquelle sind nicht sichtbar.

## Patentansprüche

1. Handgerät zur Trocknung gewaschener Fahrzeuge, das länglich ausgebildet, über eine flexible Leitung an eine Druckluftquelle anschließbar ist und wenigstens eine Austrittsöffnung für Druckluft aufweist, wobei die Austrittsöffnung am Gerät längsseitig angeordnet ist, und wobei das Handgerät mit einer schlitzförmigen Austrittsöffnung und /oder einer Reihenanordnung von Austrittsöffnungen für die Erzeugung einer vorhangartigen Trocknungsströmung versehen ist, **dadurch gekennzeichnet, dass** das länglich ausgebildete Trocknungsteil(1) mindestens ein arretierbares Gelenkstück(2) und / oder mindestens ein arretierbares Scharnier und / oder mindestens ein arretierbares formflexibles Material enthält, so dass die Form durch mindestens eine Knickstelle variabel ist.

2. Handgerät nach Anspruch 1 **dadurch gekennzeichnet, dass** das längliche Trocknungsteil ganz aus arretierbarem formflexiblen Material ist.

3. Handgerät nach Anspruch 1 oder 2 **dadurch gekennzeichnet, dass** an dem länglichen Trocknungsteil(1) mindestens eine stielähnlich ausgebildete Griffeinheit(7) ist, die mindestens ein kugelkopfähnliches Teil(9) hat, wodurch das knickbare längliche Trocknungsteil(1) um bis zu 360 Grad drehbar und neigbar ist.

4. Handgerät nach einem der Ansprüche 1 bis 3 **dadurch gekennzeichnet, dass** an der Unterseite des arretierbaren Gelenkstücks(2) und / oder arretierbaren flexiblen Materials mindestens eine schlitzförmige und / oder mindestens eine runde Austrittsöffnungen() für die Trocknungsströmung(6) enthält, die an den Druckluftkreislauf angeschlossen ist, so dass die vorhangartige Trocknungsströmung(6) nicht durch das eine arretierbare Gelenkstück und/oder arretierbare flexible Material unterbrochen ist.

5. Handgerät nach einem der Ansprüche 1 bis 4 **dadurch gekennzeichnet, dass** das arretierbare Gelenkstück(2) und / oder arretierbare flexible Material eine Mechanik enthält, die das Gelenkstück automatisch knickt, so dass der Knickvorgang durch Knopfdruck gesteuert ist.

6. Handgerät nach Anspruch 5 **dadurch gekennzeichnet, dass** die Mechanik pneumatisch und /oder hydraulisch und / oder elektrisch betrieben ist.

7. Handgerät nach einem der Ansprüche 1 bis 6 **dadurch gekennzeichnet, dass** die Griffeinheit(7) mindestens ein teleskopartiges Teil hat, wodurch die Länge der Griffeinheit variabel ist.

8. Handgerät nach einem der Ansprüche 1 bis 7 **dadurch gekennzeichnet, dass** die Griffeinheit mindestens ein arretierbares Gelenk(8) oder arretierbares flexibles Material enthält, so dass die Form der Griffeinheit durch mindestens eine Knickstelle variabel ist.

9. Handgerät nach einem der Ansprüche 1 bis 8 **dadurch gekennzeichnet, dass** die Griffeinheit mindestens ein Display enthält, wodurch zum Beispiel Trocknungszeit und/oder Geräteeinstellung anzeigt ist.

10. Handgerät nach einem der Ansprüche 1 bis 9 **dadurch gekennzeichnet, dass** an der Griffeinheit mindestens eine lösbare Verbindung(10) zum Trocknungsteil(1) ist, wodurch die Griffeinheit abnehmbar ist.

11. Handgerät nach einem der Ansprüche 1 bis 10 **dadurch gekennzeichnet, dass** das Handgerät mindestens einen Computer-chip enthält, wodurch zum Beispiel die Trocknungszeit oder / und die Geräteeinstellung gesteuert ist.

12. Handgerät nach einem der Ansprüche 1 bis 11 **dadurch gekennzeichnet, dass** an dem Handgerät mindestens ein Ventil zur Unterbrechung oder / und Steuerung des Druckluftstroms ist.
